Europäisches Patentamt

European Patent Office

Office européen des brevets

(11) Veröffentlichungsnummer: **0 480 460 A1**

## (12) EUROPÄISCHE PATENTANMELDUNG

(21) Anmeldenummer: **91117383.9**

(22) Anmeldetag: **11.10.91**

(51) Int. Cl.[5]: **F16F 13/00**, F16F 3/08, B60K 5/12

(30) Priorität: **12.10.90 DE 4032504**
**29.08.91 DE 4128761**

(43) Veröffentlichungstag der Anmeldung:
**15.04.92 Patentblatt 92/16**

(84) Benannte Vertragsstaaten:
**DE ES FR GB IT**

(71) Anmelder: **METZELER GIMETALL AG**
**Gneisenaustrasse 15**
**W-8000 München 50(DE)**

(72) Erfinder: **Härtel, Volker, Dr.**
**Fichtenstrasse 50**
**W-8034 Germering(DE)**
Erfinder: **Richter, Matthias, Dr.**
**Walchstadterstrasse 16**
**W-8084 Inning(DE)**
Erfinder: **Gugsch, Mathias**
**Schliessheimerstrasse 280a**
**W-8000 München 40(DE)**

(74) Vertreter: **Michelis, Theodor, Dipl.-Ing. et al**
**Seibert + Michelis Rechtsanwälte und**
**Patentanwälte Tattenbachstrasse 9**
**W-8000 München 22(DE)**

(54) **Verfahren zur Variation der Federsteifigkeit eines Elastomerlagers und entsprechendes Lager.**

(57) Bei einem reinen Elastomerlager ist zur Variation der Federsteifigkeiten in Abhängigkeit von vorgegebenen Betriebsparametern, inbesondere der Drehzahl, erfindungsgemäß vorgesehen, daß von zwei parallelgeschalteten Federkörpern (1,2,3) einer der beiden Federkörper (1,2) ständig im Eingriff mit seinen Abstützungen und der andere der beiden Federkörper (3) nur zeitweise in Anlage an seine Abstützungen gebracht wird derart, daß beide Federkörper die eingeleiteten Kräfte parallel aufnehmen.

Fig.1

Die Erfindung bezieht sich auf ein Verfahren zur Variation der Federsteifigkeit eines Elastomer-Lagers als Motorlager für Kraftfahrzeuge, mit zwei, zumindest zeitweise gleichzeitig belastbaren Gummikörpern sowie ein entsprechendes elastisches Lager.

Moderne Motorlager haben im allgemeinen die Aufgabe, sowohl die verschiedenen im Fahrbetrieb auftretenden statischen und dynamischen Motorhaltekräfte aufzunehmen und die daraus resultierenden niederfrequenten Schwingungen des Motors zu bedämpfen, als auch die Übertragung von akustischen Schwingungen, die sich vom Motor auf die Karosserie und damit den Fahrgastraum eines Kraftfahrzeuges ausbreiten, zu unterbinden. Das bedeutet, daß dieses Lager im niederfrequenten und im hochfrequenten Bereich unterschiedliche Eigenschaften hinsichtlich Steifigkeit und Verlustwinkel der Dämpfung aufweisen muß. Dies bedingt bei der Auslegung eines Motorlagers erhebliche Kompromisse, die bei ungünstigen Bedingungen weit vom jeweiligen Optimum liegen können. Eine Möglichkeit zur Verringerung auftretender Abweichungen vom Optimum besteht in der Verwendung bekannter hydraulisch gedämpfter Motorlager, die eine höhe Dämpfung niederfrequenter Schwingungen bewirken und gleichzeitig eine gezielte Entkopplung der hochfrequenten Schwingungen ermöglichen. Aber auch bei diesen Lagern sind die Eigenschaften im niederfrequenten und im hochfrequenten Bereich nicht unabhängig voneinander einstellbar, wodurch die Abstimmung auf die jeweils geforderten Werte sehr aufwendig wird. Darüberhinaus haben derartige hydraulisch gedämpfte Motorlager im allgemeinen den Nachteil, daß eine Veränderung der dynamischen Steifigkeit nur in axialer, d.h. in vertikaler Richtung eintritt, während sie in radialer Richtung weitgehend unverändert bleibt. Eine gesteuerte Steifigkeitsänderung, die sich den jeweiligen Betriebszuständen anpaßt, ist nicht möglich.

Der vorliegenden Erfindung liegt daher die Aufgabe zugrunde, ausgehend von einem reinen Elastomerlager ein Verfahren anzugeben, mit dem die Federsteifigkeit und die Dämpfung eines solchen Lagers abhängig von vorgegebenen Betriebsparametern variiert werden kann, und zwar in dem Sinne, daß ein solches Lager bei niederen Drehzahlen und damit großen Schwingungsamplituden insbesondere im Leerlauf relativ weich, und bei höheren Betriebsdrehzahlen relativ hart ist.

Ein solches Lager ist im Prinzip aus der GB-PS 1 408 584 bekannt, bei dem in konzentrischen Ringen zueinander verlaufenden Elastomerkörpern mit einer parabolisch geneigten Gesamtoberfläche eine angenähert parallel dazu verlaufende Lagerplatte vorgesehen ist, deren Spalt zu den Gummikörpern hin sich jedoch zum Rand hin stetig vergrößert. Bei einer Lasteinwirkung kommen nacheinander radial weiter außenliegende Gummikörper mit der Lagerplatte in Eingriff, so daß damit die Steifigkeit des Lagers in Stufen erhöht wird. Eine Variation der Steifigkeit oder ein individuelles Ineingriffbringen einzelner Elastomerkörper ist damit aber nicht möglich.

Ausgehend von diesem Stand der Technik ist zur Lösung der vorstehend genannten Aufgabe erfindungsgemäß vorgesehen, daß von zwei parallel geschalteten Federkörpern einer der beiden Federkörper ständig im Eingriff mit seinen Abstützungen und der andere der beiden Federkörper in Abhängigkeit vorgegebener Betriebsparameter nur zeitweise in Anlage an seine Abstützungen gebracht wird derart, daß beide Federkörper die eingeleiteten Kräfte parallel aufnehmen, wobei die Parallelschaltung des zweiten Federkörpers mittels einer gesondert von außen aufgebrachten Kraft vorgenommen wird, die den Federkörper zur Anlage an seine Abstützungen bringt.

Zweckmäßigerweise werden zwei Federkörper unterschiedlicher Härte verwendet, von denen der Federkörper mit der größeren Härte nur zeitweise in Wirkeingriff gebracht wird.

Dabei kann die Kraft zur Parallelschaltung mittels eines hydraulisch beaufschlagten Druckkissens oder mittels mechanischer Stellmittel aufgebracht werden.

Mit einem solchen Verfahren ist es also möglich, die Federsteifigkeit eines reinen Gummilagers zwischen einer "weichen" und einer "harten" Kennlinie jener vorgegebenen Anforderungen und Betriebsparametern zu variieren.

Darüberhinaus bezieht sich die Erfindung auf ein elastisches Lager, insbesondere Motorlager für Kraftfahrzeuge, bei dem zwischen einer Motorlagerplatte und einer karosserieseitig festgelegten Abstützplatte konzentrisch zueinander ein hohlzylindrischer Federkörper und ein massivzylindrischer Federkörper angeordnet sind, wobei erfindungsgemäß zwischen der unteren Stirnseite des zylindrischen Federkörpers und der zugeordneten Abstützplatte eine einen Hohlraum zur Abstützplatte hin begrenzende Membran angeordnet ist, welcher Hohlraum nach Einpressen einer hydraulischen Flüssigkeit den zylindrischen Federblock in Wirkverbindung mit beiden Abstützungen bringt.

Bei einem solchen elastischen Lager ist es erfindungsgemäß aber auch möglich, daß zwischen der unteren Stirnseite des zylindrischen Federkörpers und der zugeordneten Abstützplatte ein mechanischer Stempel angeordnet ist, der mit einem von einem Stellmotor angetriebenen Gewindebolzen in Eingriff steht und bei Einschalten den zylindrischen Federblock in Wirkverbindung mit den beiden Abstützungen bringt.

Zweckmäßigerweise weist dabei der zylindrische Federkörper eine geringere axiale Länge als der hohlzylindrische Federkörper auf.

Ferner ist es zweckmäßig, wenn die membranseitige Stirnwand des zylindrischen Federkörpers einen ringförmig abragenden Ansatz aufweist, der von einer auf der zugehörigen Abstützplatte festgelegten Hülse mit eingezogenem Rand mit Abstand hintergriffen ist. Dieser Ansatz kann durch eine anvulkanisierte Metallplatte gebildet sein.

Die Membran ist zweckmäßigerweise am Umfang zwischen Abstützplatte und Basis der Hülse flüssigkeitsdicht eingespannt, wobei die Abstützplatte eine regelbare Zuführung für eine Hydraulikflüssigkeit aufweist.

Nach Einpressen einer Flüssigkeit in den so gebildeten Hohlraum unter der Membran wird damit der massivzylindrische Federkörper gegen den eingezogenen Rand der Hülse gepreßt und damit eine kraftschlüssige Verbindung hergestellt, so daß dann beide Federkörper parallel zueinander eingeleitete Kräfte aufnehmen.

Die durch den Druck der Flüssigkeit erzeugte Kraft sollte dabei größer sein als die auftretenden Betriebskräfte in Form der statischen abzustützenden Last und der dynamischen Betriebskräfte. Als zweckmäßig hat sich ein Druck von etwa 5 Bar ergeben.

Für ein mechanisches Parallelschalten ist es zweckmäßig, wenn unterhalb der Abstützplatte eine tropfförmige Flanschplatte befestigt ist, die mittig einen Stellmotor trägt, von dem ein die Flanschplatte und die Abstützplatte durchdringender Gewindebolzen angetrieben ist, welcher Gewindebolzen in Eingriff mit einem zwischen Abstützplatte und zylindrischem Federblock angeordneten, kastenförmig ausgebildeten Stempel steht und dessen Oberseite zur kraftschlüssigen Anlage an den Federkörper bringbar ist.

Für ein optimales Verhältnis der Federsteifigkeiten von parallelgeschalteten Federkörpern und nur einem beaufschlagten Federkörper sollte der außenliegende hohlzylindrische Federkörper eine Shore-A-Härte von etwa 40 und der innenliegende zylindrische Federblock eine Shore-A-Härte von etwa 65 aufweisen.

Ferner ist es zweckmäßig, wenn das Verhältnis von axialer zu radialer Steifigkeit des Lagers etwa 4,5 beträgt. Für das Erreichen dieses Steifigkeitsverhältnisses kann zusätzlich der hohlzylindrische Federblock etwa mittig durch einen steifen Zwischenring axial unterteilt sein.

Darüberhinaus können aber auch unterschiedliche Radialsteifigkeiten in verschiedenen Querrichtungen erreicht werden und zwar dadurch, daß zumindest einer der Federkörper in Aufsicht eine elliptische Außenkontur aufweist.

Anhand einer schematischen Zeichnung sind Aufbau und Funktionsweise eines Ausführungsbeispiels nach der Erfindung näher erläutert. Dabei zeigen:

Fuig. 1   einen Längsschnitt durch ein elastisches Lager mit ungekoppelten Federkörpern,

Fig. 2   einen Längsschnitt dieses Lagers bei wirksamer Parallelschaltung beider Federkörper mittels eines hydraulischen Druckkissens und

Fig. 3   einen Längsschnitt durch ein solches Lager bei Parallelschaltung mittels mechanischer Stellmittel.

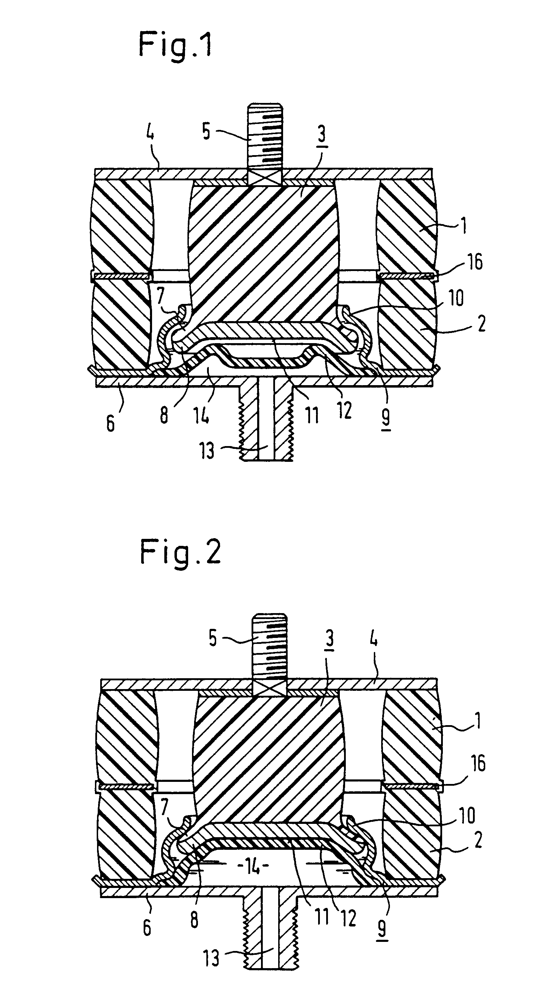

Wie man aus dem Längsschnitt nach Fig. 1 ersieht, weist das elastische Lager zunächst einen hohlzylindrischen Federkörper 1, 2 auf, der zwischen einer Motorlagerplatte 4 mit Bolzen 5 und einer karosserieseitig festgelegten Abstützplatte 6 angeordnet ist. Dieser hohlzylindrische Federkörper kann einteilig oder - wie in der Zeichnung nung dargestellt - etwa mittig durch einen steifen Zwischenring 16 in zwei hintereinander geschaltete Federkörper 1 und 2 unterteilt sein, um damit eine vorgegebene radiale Steifigkeit einhalten zu können. Innenliegend zum hohlzylindrischen Federkörper 1, 2 ist nunmehr ein massivzylindrischer Federkörper 3 angeordnet, der am oberen Ende mit der Motorlagerplatte 4 starr verbunden ist. Dieser Federkörper 3 ist bei dem dargestellten Ausführungsbeispiel etwas kürzer als der außenliegende hohlzylindrische Federkörper 1, 2 und weist am unteren Ende einen ringförmig abragenden Ansatz 7 auf, der durch eine an den Federkörper 3 anvulkanisierte Metallplatte 8 gebildet sein kann.

Dieser Ansatz 7 ist von einer auf der zugehörigen Abstützplatte 6 festgelegten Hülse 9 umgeben, deren eingezogener oberer Rand 10 den Ansatz 7 mit Abstand hintergreift.

Zwischen der Stirnseite 11 des Federkörpers 3 und der Abstützplatte 6 ist nunmehr eine flexible gewellte Membran 12 angeordnet, die am Umfang zwischen der Abstützplatte 6 und der Basis der Hülse 9 flüssigkeitsdicht eingespannt ist. Dabei weist die Abstützplatte 6 eine regelbare Zuführung 13 für eine hydraulische Flüssigkeit auf, die in den von der Membran 13 und der Abstützplatte 6 gebildeten Hohlraum 14 einmündet.

Bei dem in Fig. 1 dargestellten Ausführungsbeispiel ist zunächst nur der äußere hohlzylindrische Federkörper 1, 2 in Eingriff mit seinen Abstützungen 4 und 6, während der axiale zylindrische Federkörper 3 am unteren Ende mit Freiweg zu seiner Anschlagfläche 10 gehaltert ist, so daß nur der äußere Federkörper 1, 2 eine elastische Abstützung mit relativ weicher Kennlinie bewirkt.

Wenn nun, wie das in Fig. 2 dargestellt ist, über den Kanal 13 Hydraulikflüssigkeit in den Hohlraum 14 eingepreßt wird, so wölbt sich die Membran 12 nach oben aus, bis sie an der Stirnseite 11 des Federkörpers 3 zur Anlage kommt und diesen Federkörper nach oben zusammenpreßt bzw. den äußeren hohlzylindrischen Federkörper 1, 2 unter Vergrößerung des Abstandes der Platten 4 und 6 auseinanderzieht und zwar solange, bis der ringförmig abragende Ansatz 7 in Anlage am eingezogenen Rand 10 der Hülse 9 kommt, so daß damit eine kraftschlüssige Kopplung hergestellt und der zylindrische Federblock 3 in Wirkverbindung mit den beiden Abstützungen 4 und 6 steht. Damit ergibt sich jetzt eine wirksame Parallelschaltung beider Federkörper 1, 2 und 3 und damit eine sehr viel härtere Federsteifigkeit des Lagers mit einer steileren Federkennlinie.

Um einen dauerhaften und stabilen Kraftschluß auch für den zweiten Federkörper 3 herzustellen, muß die durch den Druck der Flüssigkeit erzeugte Kraft in der Kammer 14 größer sein als die auf das Lager einwirkenden Betriebskräfte, d.h. größer als die Summe aus statischer Last und der dynamischen Betriebskräfte. Dafür dürfte im allgemeinen ein Druck von etwa 5 Bar ausreichen.

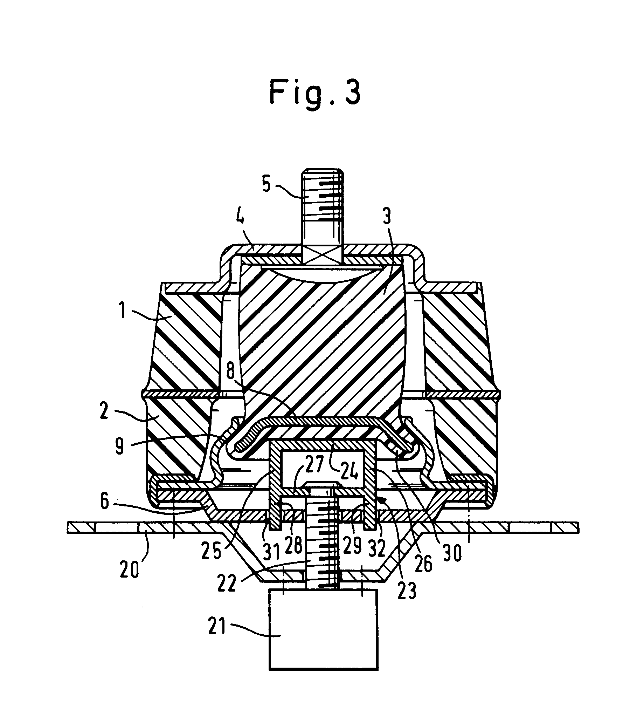

In Fig. 3 ist ein weiteres Ausführungsbeispiel mit gleichartigem Grundaufbau wie das Motorlager nach Fig. 1 und 2 gezeigt, bei dem die Parallelschaltung jedoch mit mechanischen Stellmitteln erfolgt.

Dazu ist unterhalb der unteren Abstützplatte 6 eine weitere, topfförmige Flanschplatte 20 befestigt, die mittig auf ihrer Unterseite einen beispielsweise elektrisch angetriebenen Stellmotor 21 trägt. Von diesem Stellmotor 21 wird ein Gewindebolzen 22 angetrieben, der die Flanschplatte 20 und die Abstützplatte 6 zentral durchdringt und in beiden drehbar gelagert ist.

Unterhalb der an den zylindrischen Federkörper 3 anvulkanisierten Metallplatte 8 und deren Gummiauflage 30 ist ein rechteckiger, kastenförmiger Stempel 23 angeordnet, der mit seiner horizontalen Oberseite 24 zur Anlage an die Metallplatte 8 gebracht werden kann und mit einem zwischen den beiden vertikalen Seiten 25 und 26 liegenden Horizontalsteg 27 mit dem Gewindebolzen 22 in Eingriff steht. Zusätzlich weist dieser kastenförmige Stempel 23 auf seiner Unterseite zwei abragende Stege 28 und 29 auf, die entsprechende Führungsschlitze 31 und 32 in der Abstützplatte 6 durchdringen und ein Verdrehen des Stempels 23 verhindern.

Bei Einschalten des Stellmotors 21 kann somit der Stempel 23 vertikal verfahren werden und bei Anschlag an die Gummiauflage 30 der Metallplatte 8 des zylindrischen Federkörpers 3 diesen mit seinen Abstützungen 4 und 6 in Eingriff bringen, so daß beide Federn 1, 2 und 3 parallel geschaltet sind.

In dieser Eingriffsstellung der Parallelschaltung ist das Lager nach Fig. 3 gezeigt. Bei Absenken des Stempels 23 ergibt sich eine Federstellung analog zu der in Fig. 1 dargestellten.

Anstelle der gezeigten Verstellung mittels zentral angeordnetem Stellmotor kann dieser Stellmotor aber auch seitlich angeordnet und über einen Winkeltrieb auf den Gewindebolzen 22 einwirken. Schließlich ist es aber auch möglich, anstelle der gezeigten Verstellung mittels elektrischen Stellmotors ein Parallelschalten der beiden Federn mittels eines einfachen Kniehebels durchzuführen, was jedoch hier nicht näher dargestellt ist.

Bezüglich der Ausgestaltung der Federkörper ist es zweckmäßig, wenn der außenliegende hohlzylindrische Federkörper 1, 2 eine Shore-A-Härte von etwa 40 und der innenliegende zylindrische Federblock eine Shore-A-Härte von etwa 65 aufweist.

Die Ansteuerung eines solchen Lagers und die wahlweise Parallelschaltung erfolgt zweckmäßigerweise in Abhängigkeit von der Motordrehzahl und ggf. anderer Betriebsparameter. Damit und mit der beschriebenen Gestaltung eines reinen Gummilagers ist es möglich, beispielsweise bei niedrigen Drehzahlen im Leerlauf eine weiche Kennung des Lagers zu erhalten, während bei Betriebsdrehzahlen und bei Fahrt des Fahrzeuges eine härtere Kennung durch Parallelschaltung des innenliegenden zylindrischen Federkörpers 3 zu den hohlzylindrischen Federkörpern 1, 2 erreicht werden kann.

Ein weiterer Vorteil der erfindungsgemäßen Gestaltung dieses Lagers besteht darin, daß sich die Steifigkeit des Lagers nicht nur in axialer, d.h. in vertikaler, sondern auch in radialer Richtung ändern kann, da die Gummikörper einen relativ großen radialen Freiweg aufweisen, der nur durch den Scherwiderstand des Gummis begrenzt ist. Mit der beschriebenen Gestaltung ist es dabei möglich, ein Steifigkeitsverhältnis von axialer zu radialer Steifigkeit von etwa 4,5 zu erhalten, die sich für die gewünschte Abstützung und Lagerung eines Motors als besonders günstig erwiesen hat.

Zusätzlich ist es aber auch möglich, das Lager mit unterschiedlichen Radialsteifigkeiten in verschiedenen Querrichtungen auszustatten. Dafür sollte zumindest einer der Federkörper in Aufsicht eine elliptische Außenkontur aufweisen. Es ist aber auch möglich, durch gezielte Anordnung und Verteilung von Hohlräumen in den Gummikörpern die radiale Steifigkeit gezielt zu variieren.

Insgesamt ergibt sich also ein reines Gummilager, bei dem mit einfachen Mitteln die Federsteifigkeit variiert und von einer weichen zu einer harten Kennung und umgekehrt eingestellt werden kann.

**Patentansprüche**

1.  Verfahren zur Variation der Federsteifigkeit eines Elastomerlagers als Motorlager für Kraftfahrzeuge, mit zwei zumindest zeitweise gleichzeitig belastbaren Gummikörpern, dadurch gekennzeichnet, daß von zwei parallel geschalteten Federkörpern einer der beiden Federkörper ständig im Eingriff mit seinen Abstützungen und der andere der beiden Federkörper in Abhängigkeit vorgegebener Betriebsparameter nur zeitweise in Anlage an seine Abstützungen gebracht wird derart, daß beide Federkörper die eingeleiteten Kräfte parallel aufnehmen, wobei die Parallelschaltung des zweiten Federkörpers mittels einer gesondert von außen aufgebrachten Kraft vorgenommen wird, die den Federkörper zur Anlage an seine Abstützungen bringt.

2. Verfahren nach Anspruch 1, dadurch gekennzeichnet, daß zwei Federkörper unterschiedlicher Härte verwendet werden, von denen der Federkörper mit der größeren Härte nur zeitweise in Wirkeingriff gebracht wird.

3. Verfahren nach Anspruch 1 und 2, dadurch gekennzeichnet, daß die Parallelschaltung beider Federkörper in Abhängigkeit von der Motordrehzahl erfolgt.

4. Verfahren nach Anspruch 1 oder 2, dadurch gekennzeichnet, daß die Kraft zur Parallelschaltung mittels eines hydraulisch beaufschlagten Druckkissens aufgebracht wird.

5. Verfahren nach Anspruch 1 oder 2, dadurch gekennzeichnet, daß die Kraft zur Parallelschaltung mittels mechanischer Stellmittel aufgebracht wird.

6. Elastisches Lager, insbesondere Motorlager für Kraftfahrzeuge, bei dem zwischen einer Motorlagerplatte (4) und einer karosserieseitig festgelegten Abstützplatte (6) konzentrisch zueinander ein hohlzylindrischer Federkörper (1, 2) und ein massivzylindrischer Federkörper (3) angeordnet sind, dadurch gekennzeichnet, daß zwischen der unteren Stirnseite (11) des zylindrischen Federkörpers (3) und der zugeordneten Abstützplatte (6) eine einen Hohlraum (14) zur Abstützplatte (6) hin begrenzende Membran (12) angeordnet ist, welcher Hohlraum (14) nach Einpressen einer hydraulischen Flüssigkeit den zylindrischen Federblock (3) in Wirkverbindung mit beiden Abstützungen (4, 6) bringt.

7. Elastisches Lager, insbesondere Motorlager für Kraftfahrzeuge, bei dem zwischen einer Motorlagerplatte (4) und einer karosserieseitig festgelegten Abstützplatte (6) konzentrisch zueinander ein hohlzylindrischer Federkörper (1, 2) und ein massivzylindrischer Federkörper (3) angeordnet sind, dadurch gekennzeichnet, daß zwischen der unteren Stirnseite (30) des zylindrischen Federkörpers (3) und der zugeordneten Abstützplatte (6) ein mechanischer Stempel (26) angeordnet ist, der mit einem von einem Stellmotor (21) angetriebenen Gewindebolzen (22) in Eingriff steht und bei Einschalten des Stellmotors (21) den zylindrischen Federblock (3) in Wirkverbindung mit den beiden Abstützungen (4, 6) bringt.

8. Elastisches Lager nach Anspruch 6 oder 7, dadurch gekennzeichnet, daß der zylindrische Federblock (3) eine geringere axiale Länge als der hohlzylindrische Federkörper (1, 2) aufweist.

9. Elastisches Lager nach Anspruch 6 oder 7, dadurch gekennzeichnet, daß die unterseitige Stirnwand des zylindrischen Federkörpers (3) einen ringförmig abragenden Ansatz (7) aufweist, der von einer auf der zugehörigen Abstützplatte (6) festgelegten Hülse (9) mit eingezogenem Rand (10) mit Abstand hintergriffen ist.

10. Elastisches Lager nach Anspruch 9, dadurch gekennzeichnet, daß der Ansatz (7) durch eine anvulkanisierte Metallplatte (8) gebildet ist.

11. Elastisches Lager nach Anspruch 10, dadurch gekennzeichnet, daß die Unterseite der Metallplatte (8) mit einer elastischen Gummischicht (30) bedeckt ist.

12. Elastisches Lager nach Anspruch 6, dadurch gekennzeichnet, daß die Membran (12) am Umfang zwischen Abstützplatte (6) und Basis der Hülse (9) flüssigkeitsdicht eingespannt ist und die Abstützplatte (6) eine regelbare Zuführung (13) für eine Hydraulikflüssigkeit aufweist.

13. Elastisches Lager nach Anspruch 6, dadurch gekennzeichnet, daß die durch den Druck der eingeführten hydraulischen Flüssigkeit erzeugte Kraft größer ist als die auftretenden Betriebskräfte in Form der statisch abstützenden Last und der dynamischen Betriebskräfte.

14. Elastisches Lager nach Anspruch 13, dadurch gekennzeichnet, daß der hydraulische Druck etwa 5 Bar beträgt.

15. Elastisches Lager nach Anspruch 7, dadurch gekennzeichnet, daß unterhalb der Abstützplatte (6) eine topfförmige Flanschplatte (20) befestigt ist, die mittig einen Stellmotor (21) trägt, von dem ein die Flanschplatte (20) und die Abstützplatte te (6) durchdringender Gewindebolzen (22) angetrieben ist, welcher Gewindebolzen (22) in Eingriff mit einem zwischen Abstützplatte (6) und zylindrischem Federblock (3) angeordneten, kastenförmig ausgebildten Stempel (23) steht, dessen Oberseite (24) zur kraftschlüssigen Anlage an den Federkörper (3) bringbar ist.

16. Elastisches Lager nach Anspruch 15, dadurch gekennzeichnet, daß der kastenförmige Stempel (23) auf seiner Unterseite zwei abragende Stege (28, 29) aufweist, die die Abstützplatte (6) in Führungsschlitzen (31, 32) durchdringen.

17. Elastisches Lager nach Anspruch 6 oder 7, dadurch gekennzeichnet, daß der außenliegende hohlzylindrische Federkörper (1, 2) eine Shore-A-Härte von etwa 40 und der innenliegende zylindrische Federkörper (3) eine Shore-A-Härte von etwa 65 aufweist.

18. Elastisches Lager nach Anspruch 15, dadurch gekennzeichnet, daß der hohlzylindrische Federkörper (1, 2) etwa mittig durch einen Zwischenring (16) axial unterteilt ist.

19. Elastisches Lager nach Anspruch 17, dadurch gekennzeichnet, daß das Verhältnis von axialer zu radialer Steifigkeit des Lagers etwa 4,5 beträgt.

20. Elastisches Lager nach Anspruch 19, gekennzeichnet durch unterschiedliche Radialsteifigkeiten in verschiedenen Querrichtungen.

21. Elastisches Lager nach Anspruch 20, dadurch gekennzeichnet, daß zumindest einer der Federkörper (1, 2; 3) in Aufsicht eine elliptische Außenkontur aufweist.

22. Elastisches Lager nach Anspruch 7, dadurch gekennzeichnet, daß der Stempel durch einen Kniehebel ersetzt ist.

# Fig.1

# Fig.2

# Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 119 626   (NISSAN MOTOR)<br>* Seite 1, Zeile 26 - Seite 2, Zeile 7; Anspruch 1; Abbildung 3 * * <br> – – – | 1,2,8 | F 16 F 13/00<br>F 16 F 3/08<br>B 60 K 5/12 |
| A | PATENT ABSTRACTS OF JAPAN vol. 6, no. 33 (M-114)(911) 27. Februar 1982<br>& JP-A-56 147 941 ( MASAO AKIMOTO ) 17. November 1981<br>* Zusammenfassung * * <br> – – – | 1,2,5,7,8 | |
| A | GB-A-2 165 027   (CONTINENTAL)<br>* Seite 1, Zeile 37 - Zeile 74; Ansprüche 1-4; Abbildungen * * <br> – – – | 1,3 | |
| A | PATENT ABSTRACTS OF JAPAN vol. 9, no. 92 (M-373)(1815) 20. April 1985<br>& JP-A-59 217 032 ( TOUKAI GOMU ) 7. Dezember 1984<br>* Zusammenfassung * * <br> – – – | 1 | |
| D,A | GB-A-1 408 584   (CAOUTCHOUC INDUSTRIEL)<br>* Seite 2, Zeile 120 - Seite 3, Zeile 6; Abbildungen * * <br> – – – – – | 1,2 | |

**RECHERCHIERTE SACHGEBIETE (Int. Cl.5)**

F 16 F
B 60 K

**Der vorliegende Recherchenbericht wurde für alle Patentansprüche erstellt**

| Recherchenort | Abschlußdatum der Recherche | Prüfer |
|---|---|---|
| Den Haag | 22 Januar 92 | NORDLUND J.O. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

--------------------------------------------------

& : Mitglied der gleichen Patentfamilie, übereinstimmendes Dokument